(19)

**Europäisches Patentamt**
**European Patent Office**
**Office européen des brevets**

(11) **EP 4 401 040 B1**

(12) **EUROPEAN PATENT SPECIFICATION**

(45) Date of publication and mention
of the grant of the patent:
**18.03.2026   Bulletin 2026/12**

(21) Application number: **23151086.8**

(22) Date of filing: **11.01.2023**

(51) International Patent Classification (IPC):
*G06T 13/80* (2011.01)

(52) Cooperative Patent Classification (CPC):
**G06T 13/80;** G06T 2210/41

(54) **MEDICAL IMAGE RENDERING TECHNIQUE**

VERFAHREN ZUR WIEDERGABE MEDIZINISCHER BILDER

TECHNIQUE DE RENDU D'IMAGE MÉDICALE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**17.07.2024   Bulletin 2024/29**

(73) Proprietor: **Siemens Healthineers AG
91301 Forchheim (DE)**

(72) Inventors:
• **PETKOV, Kaloian
Lawrenceville, 08648 (US)**
• **SHAH, Rishabh
Wentworth Point, NSW 2127 (AU)**

(74) Representative: **Schwarz, Claudia
Schwarz + Kollegen
Patentanwälte
Heilmannstraße 19
81479 München (DE)**

(56) References cited:
**US-B1- 10 692 267**

• **SIMON NIKLAUS ET AL: "Video Frame
Interpolation via Adaptive Separable
Convolution", ARXIV.ORG, CORNELL
UNIVERSITY LIBRARY, 201 OLIN LIBRARY
CORNELL UNIVERSITY ITHACA, NY 14853, 5
August 2017 (2017-08-05), XP080951568**

• **LIMAYE AJAY: "Drishti: a volume exploration and
presentation tool", vol. 8506, 17 October 2012
(2012-10-17), pages 85060X, XP093049755, ISSN:
0277-786X, Retrieved from the Internet
<URL:https://core.ac.uk/download/pdf/
156674828.pdf> DOI: 10.1117/12.935640**
• **RAVI RAMAMOORTHI AND CINDY BALL AND
ALAN H BARR: "Dynamic Splines with
Constraints for Animation", 1 January 1997
(1997-01-01), pages 1 - 13, XP007914778,
Retrieved from the Internet <URL:http://
citeseerx.ist.psu.edu/viewdoc/summary?
doi=10.1.1.49.5677>**
• **REDA FITSUM ET AL: "Computer Vision - ECCV
2022 : 17th European Conference, Tel Aviv,
Israel, October 23-27, 2022, Proceedings, Part
VII", vol. 13667, 1 January 2022 (2022-01-01),
Cham, pages 1 - 19, XP093050865, ISSN:
0302-9743, ISBN: 978-3-031-20071-7, Retrieved
from the Internet <URL:https://arxiv.org/pdf/
2202.04901.pdf> DOI: 10.1007/
978-3-031-20071-7_15**
• **ANONYMOUS: "Increase Space Between
Keyframes - Artwork / Animations - Blender
Artists Community", 1 October 2012
(2012-10-01), pages 1 - 1, XP093051114,
Retrieved from the Internet <URL:https://
blenderartists.org/t/
increase-space-between-keyframes/555326>
[retrieved on 20230601]**

EP 4 401 040 B1

- **WEISS SEBASTIAN ET AL: "Differentiable Direct Volume Rendering", IEEE TRANSACTIONS ON VISUALIZATION AND COMPUTER GRAPHICS, IEEE, USA, vol. 28, no. 1, 29 September 2021 (2021-09-29), pages 562 - 572, XP011895286, ISSN: 1077-2626, [retrieved on 20211224], DOI: 10.1109/TVCG.2021.3114769**

**Description**

The present invention relates to a rendering technique for rendering animations of medical images.

Volume rendering spans a wide variety of algorithms, which support different visual effects and may pose different computational challenges [1]. Conventional volume visualization methods based on ray casting, which are still used in many current advanced visualization medical products, simulate only the emission and absorption of radiant energy along the primary viewing rays through the volume data. The emitted radiant energy at each point is absorbed according to the Beer-Lambert law along the ray to the observer location with absorption coefficients derived from the patient data. Renderers conventionally compute shading using only the standard local shading models at each point along the ray (e.g., the Blinn-Phong model), based on the local volume gradients (also denoted as local illumination). While fast, these methods do not simulate the complex light scattering and extinction associated with photorealism (also denoted as global illumination). See Engel *et al.* for a more complete treatment of the topic [2], which is incorporated herein by reference.

Monte Carlo path tracing is a global illumination algorithm, which solves the rendering equation using Monte Carlo integration. It can produce highly realistic images, including for medical visualization [3]. At the same time, the computational requirements are very high since hundreds to thousands of discrete light paths need to be simulated at each pixel. As more and more paths are simulated, the solution converges on an accurate estimation of the irradiance at each point for incoming light from all directions. The renderer conventionally employs a hybrid of volumetric scattering and surface-like scattering, modeled by phase functions and bidirectional reflectance distribution functions (BRDFs), respectively, based on properties derived from the anatomical data [4]. Producing a single image using a global illumination algorithm, in particular Monta Carlo path tracing, may take on the order of minutes and is currently not suitable for real-time rendering at full quality. A variety of algorithms address the performance challenges, including irradiance caching, which, however, requires a long pre-computation on lighting changes before real-time rendering is possible, and AI-based denoising [5] and light path generation [6].

Differentiable rendering (DR) models the explicit relationship between rendering parameters and resulting images in conventional image synthesis. It obtains image-space derivatives with respect to the rendering parameters, which can be used in a variety of gradient-based optimization methods to solve inverse rendering problems or to compute the loss for training machine learning (ML) models directly in the space of rendered images. While many existing differentiable renderers such as OpenDR [7] are limited to simple surface rendering and local shading, there are examples for photorealistic surface and participating media rendering [8]. More recently, Weiss and Westermann introduced a differentiable direct volume rendering system based on automatic differentiation that is capable of computing image-space derivatives with respect to rendering parameters, the transfer function, and the volume densities [9].

Keyframing is a common animation technique in computer graphics, where a system interpolates a sparse set of keyframes along a timeline, and each frame contains the rendering parameters, scene descriptions, actions, and any further information needed to render an image.

Simon Niklaus et al. describe in "Video Frame Interpolation via Adaptive Separable Convolution", ar-Xiv:1708.01692v1, a video frame interpolation using a local separable convolution of a pair of 1D kernels instead of a 2D kernel. A deep fully convolutions neural network is used, which is trained on widely available video data using a perceptual loss.

The document US 10 692 267 B1 describes a volume rendering animation using windowing-compensated look-up table interpolation between keyframes that include user defined rendering presets. Windowing refers to how to display an intensity for the voxels of the picture to highlight particular structures. I.e., the same picture is displayed with different grey-level mapping, contrast-stretching, histogram modification or contrast enhancement throughout the animation.

While keyframing allows for very tight control over the animation (e.g., as opposed to physically-based animation systems), the creation and timing of the keyframes can be a very tedious process for an, in particular human, animator and require significant expertise to produce well-paced videos.

It is therefore an object of the present invention to provide an efficient solution and/or an efficient technique for, in particular automatically and/or promptly, creating a smooth, consistent and/or easily comprehensible animation from a (e.g., sparse) set of keyframes comprising medical images.

This object is solved by a, in particular computer-implemented, method for rendering animations of medical images, by a computing device for rendering animations of medical images, by a system comprising the computing device and by a computer program (and/or by a computer-readable medium) according to the appended independent claims. Advantageous aspects, features and embodiments are described in the dependent claims and in the following description together with advantages.

In the following, the solution and/or technique according to the invention is described with respect to the claimed, in particular computer-implemented, method for rendering animations of medical images as well as with respect to the claimed computing device and system comprising the computing device. Features, advantages or alternative embodiments herein can be assigned to the other claimed objects (e.g., the computer program or a computer program product), and vice versa. In other words, claims for the computing device and the system for rendering animations of medical images can be improved with features described or claimed in the context of the method, and vice versa. In this case, the functional features of the method are embodied by structural units of the computing device and the system and vice versa, respectively.

As to a method aspect, a, in particular computer-implemented, method for rendering animations of medical images is provided. The method comprises a step of receiving at least one input. Each of the at least one input comprises a medical image dataset. The method further comprises a step of selecting a set of keyframes associated with the received at least one input. A keyframe comprises a predetermined value for each (and/or at least one, and/or one or more selected) rendering parameter within a set of rendering parameters. The method further comprises a step of generating intermediary frames in a temporal sequence between two consecutive keyframes. The consecutive keyframes are consecutive according to a temporal ordering (also: time ordering) of the keyframes within the selected set of keyframes. Generating the intermediary frames is based on optimizing a perceptual (e.g., difference) metric associated with the selected set of keyframes and the generated intermediary frames. Optimizing the perceptual (e.g., difference) metric comprises optimizing (e.g., minimizing) the perceptual (e.g., difference) metric as a function of values of the set of rendering parameters associated with each of the intermediary frames. The method still further comprises a step of rendering an animation (also denoted as video) using the generated intermediary frames and the selected set of keyframes.

The medical image dataset comprised in an input may be received from a medical scanner (e.g., from a magnetic resonance imaging, MRI, scanner). Alternatively or in addition, the medical image dataset may comprise a synthetic dataset received from a synthetic image generator, e.g., from a neural network (NN).

Alternatively or in addition, one or more NNs may be used to detect structures in data, in particular in the at least one input, and/or in the medical image dataset.

Further alternatively or in addition, the medical image dataset, and/or the detected structures, may be used to generate the keyframes. Still further alternatively or in addition, the medical image dataset, and/or the detected structures, need not be rendered (and/or displayed), e.g., directly.

The medical image dataset may comprise a volumetric dataset, e.g., received from the medical scanner.

A Neural Radiance Field (NeRF) may comprise a, in particular fully-connected, NN. The inventive technique my use a NeRF. E.g., instead of using a volumetric dataset as medical image dataset from a medical scanner, the NeRF may use one or more two-dimensional (and/or planar) images as the medical image dataset and generate novel (e.g., three-dimensional, 3D, and/or obtained from a 3D rotation of the one or more images comprised in the medical image dataset) views (and/or images).

Synthetic datasets with specific characteristics can be used for testing a system (and/or computing device) behavior towards those characteristics, specifically in detecting the presence of the inventive method.

Practical uses of synthetic datasets further include simulation data from high performance computing applications, e.g., rather than imaging data, and/or simulation data in medical applications, e.g., blood flow and/or electrophysiological simulations of the heart, in particular a patient digital twin application.

Alternatively or in addition, keyframes can use interpolation and/or extrapolation algorithms, e.g., including optical flow and/or machine learning (ML) approaches. Further alternatively or in addition, artist-created data as a type of synthetic data can be used, e.g., by means of (and/or comprising) voxel sculpting.

The set of keyframes may comprise at least two (in particular different) keyframes.

The selecting of the set of keyframes may comprise selecting different predetermined values of a set of rendering parameters associated with the at least one input (and/or the at least one medical image dataset). E.g., different camera parameters (also denoted as viewing parameters and/or viewing directions) may be selected for an input (and/or for a medical image dataset), in particular received from a medical (e.g., MRI) scanner.

Alternatively or in addition, the at least one input (and/or medical image dataset) may comprise two or more inputs (and/or medical image datasets). E.g., the input may comprise medical image datasets received at different instants in time (also denoted as moments in time, and/or points in time). For example, the medical image datasets may be acquired with a temporal separation of a few days, several weeks, several months, and/or years. Thereby, a progression of a health condition (and/or a course of disease), e.g., a growth of a tumor and/or a development of a lesion, over time may be documented and/or visualized.

Alternatively or in addition, the at least one input (and/or medical image dataset) may comprise two or more inputs (and/or medical image datasets) as temporal data. E.g., an acquisition separation of medical image datasets (and/or instances of medical image datasets, briefly also: medical images) may be of the order of (e.g., a few) milliseconds. For example, the temporal data may comprise ultrasound data, and/or so-called cine sequences of magnetic resonance imaging (MRI) data and/or of computed tomography (CT) data, e.g., in heart scans (also denoted as cardiac scans). A cine sequence of MRI data may comprise a plurality of consecutive frames acquired using an MRI scanner. A frame may comprise, in particular medical, image data at one instant (and/or point) in time.

Alternatively or in addition, the at least one input may comprise two or more input medical image datasets received from different medical scanners (briefly also denoted as scanners), and/or using different medical imaging modalities. E.g., a first medical image dataset may be received from an MRI scanner, and a second medical image dataset may be received from an ultrasound (US) scanner.

Further alternatively or in addition, the at least one input (and/or medical image dataset) may comprise a two-dimensional (e.g., comprising two spatial dimensions and/or an image plane) medical image, **e.g.,** a radiographic image (also denoted as X-ray image).

Still further alternatively or in addition, the at least one input may comprise a three-dimensional medical image dataset. E.g., the medical image dataset may comprise three spatial dimensions (e.g., as a volumetric image dataset taken at one instant in time). Alternatively or in addition, the medical image dataset may comprise two spatial dimensions (and/or an image plane) and a temporal (also denoted as time-like) dimension.

Still further alternatively or in addition, the at least one input may comprise a four-dimensional medical image dataset. The four-dimensional medical image dataset may comprise three spatial dimensions and a temporal dimension.

A frame may comprise an image at one instant in time.

A keyframe may comprise a frame with a set of predetermined values of rendering parameters.

The selecting of the set of keyframes may comprise a temporal ordering of, and/or may be followed by a step of temporally ordering (e.g., re-ordering), the keyframes within the set. According to one embodiment, the temporal ordering of the keyframes may be performed by a human user (also denoted as human operator, or briefly as user, e.g., a medical practitioner). According to another embodiment, the temporal ordering of the keyframes may be performed by a computing device (e.g., the computing device performing the method according to the method aspect). According to a further embodiment, the two types of ordering may be combined. E.g., a human user may perform an initial temporal ordering, and the computing device may perform an (e.g., partial) re-ordering. The (e.g., partial) re-ordering may be based on optimizing a perceptual metric, e.g., the same perceptual metric as in the step of generating the intermediary frames.

Generating intermediary frames between (e.g., two consecutive) keyframes may be denoted as interpolating between the (e.g., consecutive) keyframes. Alternatively or in addition, generating (e.g., intermediary) frames from only one keyframe (e.g., at the beginning, at the end, and/or in the middle of an animation), may be denoted as extrapolating from the keyframe.

Alternatively or in addition, extrapolating (also denoted as: extrapolation) may refer to generating, e.g., intermediary, frames that are not comprised (e.g., in the selected set of keyframes) between, and/or beyond, the first and last keyframes on the timeline and that cannot be determined (and/or computed) by interpolation. Extrapolation may use one or more, or all, of the keyframes (e.g., within the selected set of keyframes).

E.g., an extrapolation may use the last two or more keyframes to construct frames after the last keyframe (e.g., within the selected set of keyframes), by fitting according to a statistical model. Alternatively or in addition the constructed frames and the keyframes used for the constructing may fit the statistical model.

According to one embodiment, the perceptual metric (e.g., for generating the intermediary frames, and/or for temporally ordering the keyframes) may comprise a perceptual difference metric. In particular, a large value of the perceptual difference metric may correspond to a large difference (also denoted as dissimilarity) of consecutive frames within the temporal sequence. Alternatively or in addition, a small value of the perceptual difference metric may correspond to a small difference (and/or a large similarity) of the consecutive frames within the temporal sequence.

According to another embodiment, the perceptual metric (e.g., for generating the intermediary frames, and/or for temporally ordering the keyframes) may comprise a perceptual similarity metric. In particular, a large value of the perceptual similarity metric may correspond to a large similarity of consecutive frames with the temporal sequence. Alternatively or in addition, a small value of the perceptual similarity metric may correspond to a large difference (and/or dissimilarity) of the consecutive frames within the temporal sequence.

The perceptual (e.g., difference) metric may be indicative of (and/or may quantize) a difference and/or dissimilarity between consecutive frames within the temporal sequence. E.g., a large value of the perceptual (e.g., difference) metric may indicate a large difference and/or a large dissimilarity between the consecutive frames.

Alternatively or in addition, the (e.g., value of the) perceptual metric of the intermediary frames in the temporal sequence and the keyframes (e.g., at least at the boundaries of the temporal sequence) may comprise a sum over (e.g., individual values of) the perceptual metrics associated with consecutive frames. Alternatively or in addition, the (e.g., value of the) perceptual metric of the intermediary frames in the temporal sequence and the keyframes (e.g., at least at the boundaries of the temporal sequence) may comprise an extremum (e.g., a maximum) of (e.g., values of) the perceptual (e.g., difference) metrics associated with consecutive frames.

Optimizing the perceptual **(e.g.,** difference) metric may comprise minimizing **(e.g.,** a value of) the perceptual **(e.g.,** difference) metric of the intermediary frames in the temporal sequence and the keyframes. Alternatively or in addition, optimizing the perceptual **(e.g.,** similarity) metric may comprise maximizing **(e.g.,** a value of) the perceptual **(e.g.,** similarity) metric of the intermediary frames in the temporal sequence and the keyframes.

The set of keyframes may comprise at least the start frame and the end frame of the temporal sequence. Alternatively or in addition, the set of keyframes may comprise (e.g., not generated) intermediary frames in a temporal sequence of the animation.

The generating of the intermediary frames in the temporal sequence between the two consecutive keyframes may also be denoted as interpolating between the two consecutive keyframes. Interpolating between the two consecutive keyframes may comprise interpolating the rendering parameters contained (and/or comprised) in the keyframes and rendering the intermediate frames (and/or intermediate images) accordingly.

Alternatively or in addition, interpolating between the two consecutive keyframes may comprise interpolating the images at the keyframes, e.g., using an optical flow and/or a similar technique.

The generated intermediary frames in the temporal sequence may comprise an equal temporal (and/or time-like) separation of the intermediary frames, e.g., between two consecutive keyframes. Alternatively or in addition, an (in particular) intermediary) frame rate, e.g., between two consecutive keyframes, may be constant.

Any intermediary frame, and/or any one of the keyframes, may comprise a two-dimensional image for rendering. Alternatively or in addition, a point on the timeline between the (e.g., two consecutive) keyframe times may be picked, the rendering parameters may be interpolated (e.g., between the rendering parameters of the two consecutive keyframes), and a two-dimensional (2D) image may be rendered. Further alternatively or in addition, the frame may use data interpolation (e.g., between the, in particular volumetric, data and/or datasets of the two consecutive keyframes), in which case an interpolated, in particular three-dimensional (3D), dataset (and/or image) may be associated with the new frame.

The animation may comprise the selected set of keyframes according a (e.g., predetermined and/or updated) temporal ordering as well as the generated intermediary frames in the temporal sequence.

The temporal sequence may comprise (and/or may be split into) multiple temporal sub-sequences, e.g., if the set of keyframes comprises at least three keyframes. Alternatively or in addition, any set of keyframes comprising three or more keyframes may comprise one keyframe as the start of the animation, another keyframe as the end of the animation, and one or more keyframes in the middle of the animation. Alternatively of in addition, the temporal sequence may comprise a temporal subsequence between any pair of consecutive keyframes.

The rendering may comprise displaying the animation of the generated intermediary frames in the temporal sequence and the keyframes (e.g., at least at the boundaries of the temporal sequence) on a screen, and/or on a head-mounted display (HMD).

Alternatively or in addition, an intermediate frame from the animation may be used (and/or rendered) as a standalone image showing a state between two (e.g., consecutive) keyframes.

Further alternatively or in addition, rendering may comprise using lightfield and/or autostereoscopic displays, and/or Augmented Reality (AR) systems (e.g., comprising one or more large displays with head-tracking, and/or tracked tablets). Still further alternatively or in addition, the rendering may comprise using an AR headset, and/or a Virtual Reality (VR) headset. Alternatively or in addition, Extended Reality (XR) may comprise AR and/or VR (and/or an XR headset may comprise an AR headset and/or a VR headset).

The rendering may comprise differentiable rendering (DR). DR may model the explicit relationship between rendering parameters and resulting images in conventional image synthesis. In DR, image-space derivatives with respect to the rendering parameters may be obtained, which can be used in a variety of gradient-based optimization methods, e.g., to solve inverse rendering problems, or to compute the loss for training ML models directly in the space of rendered images.

DR may be used to implement the inventive technique, e.g., by driving the rendering parameter changes (and/or the interpolation of the values of the rendering parameters) when generating (also: creating) the intermediary frames based on the perceptual metric (and/or the perceptual differences, and/or the perceptual similarities) between the generated (e.g., intermediary) images (and/or intermediary frames comprising the images).

Optical flow and/or ML based algorithms (also denoted as ML algorithms, ML approaches, and/or ML models) may be used to interpolate the rendered images, e.g., by generating (and/or creating) more or less intermediate frames (e.g., comprising the images) based on the perceptual (e.g., difference) metric.

Alternatively or in addition, optical flow and/or ML based algorithms may be used to interpolate the medical images. E.g., for imaging of a beating heart with CT, MR and/or ultrasound, interpolated medical images may be generated for each intermediate frame from a four-dimensional (4D) medical image sequence.

Alternatively or in addition, the inventive technique may be used together with a variety of rendering algorithms, including, but not limited to, photorealistic volume rendering, real-time (in particular direct) volume rendering (e.g., in particular fast volume, ray casting), mesh-based rendering and/or neural rendering.

Optimizing the perceptual metric may be gradient-based. Alternatively or in addition, the rendering parameters in the frames (e.g., the intermediary frames, and/or the keyframes, in particular if the keyframes are temporally ordered) may be optimized based on a perceptual difference of the resulting rendered frames.

Further alternatively or in addition, determining (e.g., computing) the optimal frames (e.g., the intermediary frames, and/or the keyframes, in particular if the keyframes are temporally ordered) may use gradient-based optimization.

The inventive (in particular computer-implemented) technique may be applied for clinical diagnosis, e.g., by means of providing a visual representation of a health condition and/or a pathology to a medical practitioner (e.g., a surgeon and/or an oncologist). Alternatively or in addition, the inventive (in particular computer-implemented) technique may be applied for planning a therapeutic treatment, and/or for planning a surgical intervention.

While there is a significant body of work on animation control, the inventive technique specifically focuses on solving the problem of computing optimized keyframe timing automatically. Liu and Cohen describe a system that computes the pacing for a sequence of keyframes based on specified constraints and an optimization process [10]. In contrast, by the inventive technique, the optimization process may be fully automated, in particular based on DR and perceptual metrics of the rendered images (and/or frames, e.g., comprising the keyframes and generated intermediary frames).

Liu and Cohen [10] present a motion optimization algorithm for keyframe-based animations, where the user specifies the desired keyframes together with some constraints (e.g., a maximal velocity of a hand motion), and the system computes an optimized set of keyframe parameters that satisfy those constraints (e.g., keyframe timing is relaxed so that the hand velocity doesn't exceed the specified constraint).

By contrast, the optimization loop of the inventive technique incorporates the rendering step and allows the (e.g., keyand/or intermediary) frame optimization to be driven by image-space metrics (and/or perceptual metrics, e.g., by means of image-space gradients with respect to rendering parameters with DR, and/or perceptual image differences with respect to timing and/or rendering parameters). The inventive technique is especially important for the animations of medical images (also denoted as medical visualization animations) that cannot be modelled as motions and physical movement constraints (e.g., as classification and/or lighting changes), and/or when the physical motion does not correspond directly to visible image changes (e.g., a moving clip plane through inhomogeneous data).

In contrast, the optimization in Liu and Cohen [10] does not account for the effects of the physical motion on the rendered image and is performed entirely before rendering happens. The optimization loop of [10] has a human user manually editing the animation after observing the results of each optimization pass.

The perceptual metric may comprise a perceptual hash (pHash), a structural similarity, a visual entropy, and/or a blend reference image spatial quality evaluator (BRISQUE).

The pHash may comprise a locality-sensitive hash (LSH). Alternatively or in addition, the pHash may be indicative of (and/or may quantify) a similarity between (e.g., consecutive in time) images, and/or between consecutive frames.

An algorithm for determining the pHash may comprise image modification, e.g., compression, color correction and/or brightness. E.g., for a color image, a gray scale image may be determined. Alternatively or in addition, a resolution of an image may be scaled down, e.g., in terms of a number of pixels.

Alternatively or in addition, the pHash may be determined based on a Hamming distance of consecutive images, and/or consecutive frames. E.g., the Hamming distance may comprise a counting of bits (and/or pixels) that differ from one image to the next image.

The pHash may be determined for any pair of consecutive frames. Alternatively or addition, the pHash may be cumulative, **e.g.,** by summing over the pHashes of all pairs of consecutive frames between two consecutive keyframes.

The result of the comparison of (e.g., two consecutive) images and/or frames may be a metric-specific value that indicates some amount of difference and/or similarity. In some embodiments, the result may be normalized, e.g., the range of 0..1 (e.g., with the value 0 indicating identity according to a perceptual difference metric). In some other embodiments, the result need not be normalized (and/or a normalization may not be possible), but a threshold value of an acceptable similarity (and/or dissimilarity) may be employed before starting to generate (e.g., more) intermediate frames. E.g., an intermediary frame may be promoted to a keyframe of an expanded set of keyframes in case of a dissimilarity exceeding a dissimilarity threshold value, and the step of generating intermediary frames may be repeated for the newly promoted keyframe and its neighboring (e.g., preceding and/or subsequent) keyframes.

A (e.g., direct) pixel-to-pixel comparison (e.g., using root mean square error, RMSE, and/or peak signal-to-noise ratio, PSNR) and/or pHash may be the simplest and/or most absolute way to compare images, and/or frames. Alternatively or in addition, the images (and/or frames) need not be perceived as individual pixels, e.g., instead it may be looked (e.g., for the perceptual, in particular difference, metric, and/or for the comparison) for structures and patterns in (e.g., two consecutive) images. Further alternatively or in addition, statistical similarity measurements, e.g., using SSIM, may be used for the comparison of the (e.g., two consecutive) images.

PHash metrics (or briefly: pHashes) are conventionally designed to pick out (in particular types and/or kinds of) differences (and/or dissimilarities) that a human vision system would be more perceptible to, e.g., as compared to other (in particular types and/or kinds of) differences in images (and/or frames) conventionally not captured by a human observer. The (in particular types and/or kinds of) differences picked out by the pHash may, or may not (and/or need not), weigh all pixel-to-pixel changes equally.

A perceptual metric may use a multi-scale comparison, e.g., by scaling down a resolution and/or a number of pixel representing any one of the images before comparing them.

According to some embodiments, in which an image is scaled down as a part of a perceptual image comparison (and/or a value of the perceptual metric is determined), when the scale down process is performed (e.g., four pixels are combined to one pixel), individual pixel information may be lost, but the resultant pixel image (e.g., the, in particular pixel-wise, comparison of scaled down images) may be a better representation of the overall difference of the images in the four pixels when combined together into one pixel.

The structural similarity (also denoted as structural similarity index measure, SSIM) may be indicative of (and/or may quantify) a similarity between (e.g., consecutive in time) images, and/or between consecutive frames.

The structural similarity may comprise a full reference metric, and/or may be based on an uncompressed and/or distortion-free image as reference. E.g., among two consecutive frames, the first (and/or earlier within the temporal sequence) frame may comprise the reference image. The structural similarity may be determined by comparing the image of the second (and/or later within the temporal sequence) frame with the reference image.

E.g., the structural similarity of two images (and/or frames) x and y may determined as a weighted product of a luminance $l(x,y)$, contrast $c(x,y)$ and structure $s(x,y)$: $SSIM = l(x, y)^\alpha c(x, y)^\beta s(x, y)^\gamma$, e.g., with

$$l(x, y) = \frac{2\mu_x\mu_y + c_1}{\mu_x^2 + \mu_y^2 + c_1} \; ; \quad c(x, y) = \frac{2\sigma_x\sigma_y + c_2}{\sigma_x^2 + \sigma_y^2 + c_2} \; ;$$

$$s(x, y) = \frac{\sigma_{xy} + c_3}{\sigma_x\sigma_y + c_3} \text{, and with } \mu_x \text{ the pixel sample}$$

mean of x, $\mu_y$ the pixel sample mean of y, $\sigma_x^2$ the variance of x, $\sigma_y^2$ the variance of y, $\sigma_{xy}$ the covariance of x and y and constants $c_1$, $c_2$ and $c_3$ (e.g., depending on a dynamic range of pixel-values of the images x and y, and/or in particular with $c_3 = c_2/2$) for stabilization of the divisions with a weak denominator. The weights $\alpha$, $\beta$ and y may be in the range between 0 and 1. More details on (e.g., multiscale) structural similarity can be found in Z. Wang et al. [11], which is incorporated herein by reference.

Alternatively or in addition, the inventive technique may use one or more conventional image similarity metrics, combinations of metrics, and/or ML approaches to compare images. In a practical sense, some metrics may provide better performance with certain types of rendering, e.g., pHash and/or BRISQUE for photorealistic rendering, and/or SSIM for illustrative rendering.

The visual entropy may comprise a measure for the amount of information comprised in an image (and/or a frame). The visual entropy may in particular increase with a visual complexity of the image (and/or the frame). Alternatively or in addition, the visual entropy may be indicative of an incompressibility of the image (and/or the frame). E.g., the visual entropy may increase with the number of bits required for coding the information comprised in the image (and/or the frame).

The BRISQUE may comprise a score based on extracting natural scene statistics and determining feature vectors. Alternatively or in addition, BRISQUE may comprise a no reference image quality assessment (NR-IQA) algorithm.

The perceptual metric may be based on determining a difference of a quantification of one image (and/or frame) and a quantification of the neighboring (e.g., preceding and/or subsequent in the temporal sequence) image (and/or frame). E.g., the perceptual metric may comprise a difference of visual entropies of consecutive images (and/or frames). Alternatively or in addition, the perceptual metric may comprise a difference of BRISQUE scores of consecutive images (and/or frames).

Neighboring images may comprise consecutive images. Alternatively or in addition, the neighboring image may refer to either the first (also denoted as preceding) or the second (also denoted as subsequent) image with in a pair of consecutive images.

Alternatively or in addition, the perceptual metric may be based on a quantification of a difference, in particular of consecutive images (and/or frames). E.g., the pHash and/or the structural similarity may be defined as a difference (and/or change) of consecutive images (and/or frames).

The at least one input may comprise a two-dimensional (2D) medical image dataset, a three-dimensional (3D) medical image dataset, and/or a four-dimensional (4D) medical image dataset.

The two-dimensional medical image dataset may comprise a planar image. Alternatively or in addition, the three-dimensional medical image dataset may comprise a volumetric image. Further alternatively or in addition, the four-dimensional medical image dataset may comprise a volumetric image evolving over time.

Still further alternatively or in addition, the three-dimensional medical image dataset may comprise a temporal sequence of two-dimensional images (also denoted as a two-dimensional and/or planar image evolving over time).

The at least one medical image dataset may be received from a medical scanner.

The medical scanner may comprise a device associated with a medical imaging modality.

The medical imaging modality may comprise magnetic resonance imaging (MRI), radiography (also denoted as X-rays), ultrasound (US), echocardiography, computed tomography (CT), and/or single-photon emission computed tomography (SPECT).

Alternatively or in addition, the medical scanner may comprise an MRI device, an X-ray device, a US device, an echocardiograph, a CT device, and/or a SPECT device.

According to some embodiments, the at least one medical image dataset may comprise at least two different medical image datasets obtained from at least two different medical scanners.

The at least two different medical scanners may comprise scanners associated with at least two different scanning modalities. E.g., at least one keyframe may correspond to (and/or comprise) an MRI image dataset, and at least one further keyframe may correspond to (and/or comprise) a CT image dataset.

Alternatively or in addition, the at least two different medical scanners may comprise at least two different scanners using the same scanning modality. E.g., the at least two different medical scanners may comprise two different CT scanners (and/or two different MRI scanners). The scanners may differ in terms of their scanning parameters, e.g., two different MRI scanners may use different magnetic field strengths.

Alternatively or in addition, the at least two different medical scanners may provide medical image datasets with different resolutions.

The set of rendering parameters may comprise at least one rendering parameter, in particular a camera parameter, a clipping parameter, a classification parameter (also denoted as classification preset), and/or a lighting preset parameter (briefly also: lighting parameter, and/or lighting preset).

The at least one camera parameter (also: viewing parameter) may comprise one or more extrinsic camera parameters, e.g., defining a location and/or an orientation of a (e.g., virtual) camera and/or a viewer. Alternatively or in addition the at least one camera parameter may comprise one or more intrinsic camera parameters, e.g., enabling a mapping between camera coordinates and pixel coordinates of an image (and/or a frame).

The at least one clipping parameter may encode a clipping (also denoted as cutting-out) of features (e.g., parts of an anatomical structure) from the at least one medical image dataset, in particular for the rendering. E.g., a clipping parameter may specify a section of a human skull (as an example of a feature) to be cut out of the rendered image. Thereby, structures inside the skull, in particular parts of the brain, may be visible in the rendered image.

The at least one classification parameter may comprise a classification of tissue and/or of anatomical structures, e.g., per pixel. Alternatively or in addition, the at least one classification parameter may correspond to, or may comprise, an anatomical segmentation of the medical image dataset. Further alternatively or in addition, the at least one classification parameter may comprise a transfer function, and/or a windowing.

The at least one lighting preset parameter (briefly also lighting parameter) may comprise a direction of a light source, and/or a shape of a light source. E.g., a light source may be planar, point-like or spherical. Alternatively or in addition, the light source may be situated, e.g., towards any side from, and/or in direction of, the view point of an observer.

The set of rendering parameters may comprise any further rendering parameter that can affect the rendered image (also denoted as scene).

The method may further comprise a step of temporally ordering the keyframes within the selected set of keyframes. Optionally, the temporal ordering may be based on optimizing a perceptual metric.

An initial temporal ordering may be performed by a human operator (also denoted as human user, or briefly as user). Alternatively or in addition, an initial temporal ordering may be based on an order, in which the selected keyframes are received.

The keyframes may be temporally ordered, and/or an initial temporal ordering may be changed, based on optimizing a perceptual metric applied exclusively to the set of keyframes. The perceptual metric used for temporally ordering (and/or re-ordering) the set of keyframes may be the same perceptual metric as used in the step of generating intermediary frames.

Alternatively or in addition, the perceptual metrics of the step of temporally ordering the set of keyframes and of the step of generating intermediary frames may be independently chosen. In particular, the perceptual metric of the step of temporally ordering the set of keyframes may be different from the perceptual metric of the step of generating intermediary frames.

An initial temporal ordering may be modified if a value of the perceptual (e.g., difference) metric for the temporal ordering reaches, and/or exceeds, a predetermined threshold value indicative of a perceptual dissimilarity.

A length of a time interval between consecutive intermediary frames may be constant between two consecutive keyframes.

A time interval between consecutive (e.g., intermediary, and/or key) frames is (and/or may be) the inverse of (and/or inversely proportional to) a frame rate. The frame rate may also be denoted as frame frequency rate, frame frequency or frequency rate. The frame rate may be fixed, and/or variable.

A keyframe rate may be proportional to a video (and/or animation) frame rate, e.g., with one keyframe every second, and/or one keyframe for every ten (10) rendered (in particular mostly intermediary) frames. Alternatively or in addition, the keyframe rate may be variable and/or independent of the video (and/or animation) frame rate.

The frame rate may be provided (and/or measured) in frames per second (FPS), and/or in Hertz (Hz). E.g., a frame rate for cinema or TV content may be in the range of 24 FPS or 25 FPS and/or 50 FPS or 60 FPS, depending on a world region. Alternatively or in addition, for animations of medical images (also denoted as medical videos), in particular according to the inventive technique, the frame rate may comprise, e.g., between 4 FPS and 240 FPS, in particular in the range of 10 FPS and 60 FPS (e.g., 10 FPS, 12 FPS, 15 FPS, 24 FPS, 30 FPS, and/or 60 FPS).

The time interval between consecutive frames may be inversely proportional to the speed of the animation. Alternatively or in addition, the frame rate may be proportional to the speed of the animation. The speed of the animation (and/or the frame rate) may be constant between one keyframe and the next (and/or consecutive) keyframe. Alternatively or in addition, the speed of the animation (and/or the frame rate) may differ from one pair of consecutive keyframes to another pair of consecutive keyframes. E.g., a first speed of the animation (and/or a first frame rate) may apply to a part of the animation starting with a first keyframe and ending with a second keyframe. A second speed of the animation, which may be different (e.g., slower or faster) from the first speed of the animation, (and/or a second frame rate, which may be different, e.g., slower or faster, from the first frame rate) may apply to a part of the animation starting with the second keyframe and ending with a third keyframe. The naming of the first keyframe, second keyframe and third keyframe may correspond to a temporal ordering of the respective keyframes.

A first length of a time interval (and/or a first frame rate) between a first set of consecutive intermediary frames associated with a first pair of consecutive keyframes (e.g., comprising the first keyframe and the second keyframe) may be independent of a second length of a time interval (and/or a second frame rate) between a second set of consecutive intermediary frames associated with a second pair of consecutive keyframes (e.g., comprising the second keyframe and the third keyframe). The second pair of consecutive keyframes may differ from the first pair of consecutive keyframes.

A length of a time interval (and/or a frame rate) between consecutive intermediary frames associated with the pair of consecutive keyframes may depend on a value of a perceptual metric between the keyframes within the pair of consecutive keyframes. E.g., a large value of a perceptual difference metric may be indicative of a large difference in the keyframes, and in order to smoothen the animation, a length of the time interval between the keyframes may be increased, e.g., by generating a large (or larger) number of intermediary frames (e.g., iteratively by promoting one or more initially generated intermediary frames to further keyframes and repeating the step of generating intermediary frames with the expanded set of keyframes).

Alternatively or in addition, a number of intermediary frames associated with a pair of consecutive keyframes may depend on a value of a perceptual metric between the keyframes within the pair of consecutive keyframes.

Optionally, a number of generated intermediary frames may increase with a value of the perceptual (e.g.,

difference) metric.

The length of a time interval between consecutive intermediary frames (and/or a frame rate) may be kept constant while at the same time reducing the speed of the animation by generating a larger number of intermediary frames.

The step of generating the intermediary frames in the temporal sequence may further comprise extending a length of a time interval between at least one pair of consecutive keyframes (briefly also: between consecutive keyframes) within the selected set of keyframes (and/or reducing a keyframe rate associated with the at least one pair of consecutive keyframes within the selected set of keyframes). E.g., the selected set of keyframes may be associated with a constant length of a time interval between consecutive keyframes (and/or a constant keyframe rate). Alternatively or in addition, the step of generating the intermediary frames associated with the (e.g., originally) selected set of keyframes may comprise generating a predetermined number of intermediary frames between consecutive keyframes. Alternatively or in addition, a predetermined (e.g., intermediary) frame rate may be applied for rendering.

Alternatively or in addition, the step of generating the intermediary frames in the temporal sequence may further comprise expanding the selected set of keyframes by promoting one or more intermediary frames to keyframes, which may be added to the selected set of keyframes to form an expanded set of keyframes. The one or more intermediary frames, which are to be promoted to keyframes of the expanded set of keyframes, may in particular be associated with the at least one pair of consecutive keyframes, for which the length of the time interval has been extended (and/or for which the keyframe rate has been reduced).

The step of generating the intermediary frames in the temporal sequence may be repeated for the expanded set of keyframes.

The extending of the length of the time interval between the (e.g., at least one pair of) consecutive keyframes may also be denoted as modifying, and/or moving, a timeline between (e.g., original) keyframes.

The extending of the length of the time interval between the (e.g., at least one pair of) consecutive keyframes, and/or the modifying, and/or the moving, of the timeline may be based on a value of the perceptual (e.g., difference and/or similarity) metric of the (e.g., respective) consecutive keyframes. E.g., one or more intermediary frames between the (e.g., respective) consecutive keyframes may be promoted to a keyframe of the expanded set of keyframes, if the perceptual metric is indicative of the (e.g., respective) consecutive keyframes reaching, and/or exceeding, a predetermined threshold value indicative of a perceptual dissimilarity.

Repeating the step of generating the intermediary frames in the temporal sequence (and/or interpolating between the keyframes) for the expanded set of keyframes may comprise modifying the generating (also denoted as generation) of the (e.g., associated and/or optimized) values of the set of rendering parameters.

E.g., the generating, and/or the optimizing, of the values of the set of rendering parameters per intermediary frame may comprise (e.g., constrained) spline interpolation, and/or linear interpolation.

Spline interpolation may utilize a piecewise polynomial, denoted as spline, as interpolant.

By expanding the set of keyframes, a smoothness of the perception of the animation may be improved, and/or a perceptual error may be reduced. E.g., when changing the camera parameter (and/or, e.g., a viewing direction) relative to a partial clipping of an anatomical structure, abrupt changes at the boundaries of the clipping in the rendered animation may be mitigated.

The expanding of the set of keyframes may comprise a manual selection of one or more intermediary frames to be promoted to keyframes. Alternatively or in addition, the expanding of the set of keyframes may be performed without manual input, and/or fully automatically, e.g., based on a limitation of optimizing the perceptual metric (e.g., the perceptual, in particular difference, metric exceeding a predetermined threshold before the expansion of the set of keyframes).

Alternatively or in addition, the step of generating the intermediary frames in the temporal sequence may be performed iteratively, e.g., new intermediary frames may be generated after adding a further keyframe (e.g., a promoted intermediary frame) to the expanded set of keyframes.

The number of additionally generated intermediary frames may depend on a value of the perceptual metric between the newly added keyframe and the neighboring (e.g., preceding, and/or consecutive) keyframe.

Alternatively or in addition, a length of a time interval among the additionally generated intermediary frames may depend on a value of the perceptual metric between the newly added keyframe and the neighboring (e.g., preceding, subsequent and/or consecutive) keyframe.

The promoting of one or more intermediary frames to keyframes may be performed (e.g., only) if the perceptual (e.g., difference) metric between consecutive intermediary frames comprising the to-be-promoted one or more intermediary frames reaches, and/or exceeds, a predetermined threshold indicative of a perceptual difference (and/or dissimilarity). Alternatively or in addition, the promoting of one or more intermediary frames to keyframes may be performed (e.g., only) if the perceptual (e.g., similarity) metric between consecutive intermediary frames comprising the to-be-promoted one or more intermediary frames reaches, and/or falls below, a predetermined threshold indicative of a perceptual similarity.

The at least one input (and/or medical image dataset) may comprise one or more animations. The one or more animations received as input may be comprised in the rendered animation.

The input (and/or medical image dataset), and/or the selected set of keyframes may comprise (and/or contain) at least one annotation.

The one or more annotation may comprise a textual annotation, a geometric annotation, a shading, and/or an anatomical segmentation.

Alternatively or in addition, the one or more annotation may comprise a measurement and/or a measurement result, e.g., as an embedded ruler with a marking and/or text label.

A technique for the rendering may comprise DR. Alternatively or in addition, the technique may utilize one or more ML algorithms.

The method may be performed by a NN, in particular comprising a convolutional neural network (CNN). Alternatively or in addition, the method may be performed using artificial intelligence (AI).

The NN, and/or any AI, may be trained on a number of inputs (and/or medical image datasets) received during a training phase. The training phase may be supervised, partly supervised, or unsupervised. E.g., a rendered animation may be accepted or rejected by a human observer and/or by a, e.g., dedicated NN (e.g., comprising a discriminator, and/or a generative adversarial network, GAN).

Alternatively or in addition, in an inference phase, the NN, and/or the AI, may perform the method supervised and/or fully automated.

In an embodiment, the NN, and/or the AI (and/or the, e.g., AI, model), may be trained based on an perceptual error (and/or based on values of a perceptual metric) generated from animation of different, in particular rendering, parameters (e.g., applied to the same medical image dataset and/or volumetric dataset). The NN, AI, and/or model may be deployed to resource limited systems, to generate animations from arbitrary sets of keyframes without expensive image comparisons.

Alternatively or in addition, the NN, AI, ML algorithm, and/or any other model may be trained by means of reinforcement learning.

Alternatively or in addition, metric learning may be utilized by the NN, AI, ML algorithm, and/or any other model. By the metric learning, a similarity metric (and/or a perceptual, e.g., similarity metric) may be learnt from weakly supervised data (e.g., comprising the at least one input, and/or the medical image dataset), in particular as opposed to manually crafted features or math. Metric learning may replace the image comparison (and/or the determining of a perceptual metric of consecutive frames, in particular of intermediary frames and/or keyframes) of the inventive technique.

As to a device aspect, a computing device for rendering animations of medical images is provided. The computing device comprises a receiving unit configured for receiving at least one input. Each of the at least one input comprises a medical image dataset. The computing device further comprises a selecting unit configured for selecting a set of keyframes associated with the received at least one input. A keyframe comprises predetermined values of a set of rendering parameters (e.g., one predetermined value per rendering parameter, and/or a predetermined value for at least one selected rendering parameter). The computing device further comprises a generating unit configured for generating intermediary frames in a temporal sequence between two consecutive keyframes. The consecutive keyframes are consecutive according to a temporal ordering (also: time ordering) of the keyframes within the selected set of keyframes. Generating the intermediary frames is based on optimizing a perceptual (e.g., difference) metric associated with the selected set of keyframes and the generated intermediary frames. Optimizing the perceptual (e.g., difference) metric comprises optimizing (e.g., minimizing) the perceptual (e.g., difference) metric as a function of values of the set of rendering parameters associated with each of the intermediary frames. The computing device still further comprises a rendering unit configured for rendering an animation using the generated intermediary frames and the selected set of keyframes.

The computing device may further comprise a temporally ordering unit configured for temporally ordering the keyframes within the selected set of keyframes. Optionally, the temporal ordering may be based on optimizing a perceptual metric.

The computing device may be configured for performing the method according the method aspect.

As to a system aspect, a medical viewing system for rendering animations of medical images is provided. The medical viewing system comprises a computing device according to the device aspect and a display for displaying the rendered animation.

As to a further aspect, a computer program product is provided comprising program elements which induce a computing device (and/or a server) to carry out the steps of the method for rendering animations of medical images according to the method aspect, when the program elements are loaded into a memory of the computing device (and/or the server).

As to a still further aspect, a computer-readable medium is provided, on which program elements are stored that can be read and executed by a computing device (and/or a server), in order to perform steps of the method for rendering animations of medical images according to the method aspect, when the program elements are executed by the computing device (and/or the server).

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

Fig. 1          is a flow chart of a method according to a preferred embodiment of the present invention;

Fig. 2          is an overview of the structure and architecture of the computing device according to a preferred embodiment of the present invention;

Figs. 3A        to 3G illustrate an optimized ordering of keyframes in medical image dataset comprising a human pelvis and hip joints;

Figs. 4A        and 4B show an example of creating, by means of a user interface, a temporally ordered set of keyframes in Fig. 4B from a comprehensive set of keyframes comprising a plurality of different combinations of predetermined values of rendering parameters, in particular classification and camera parameters, of a medical image dataset, some of which are displayed in Fig. 4A; and

Figs. 5A to 5D  sown an example of an AI-based liver, lesions, and vessels segmentation to synthesize clinically relevant views of patient data for oncological support without user intervention.

Any reference signs in the claims should not be construed as limiting the scope.

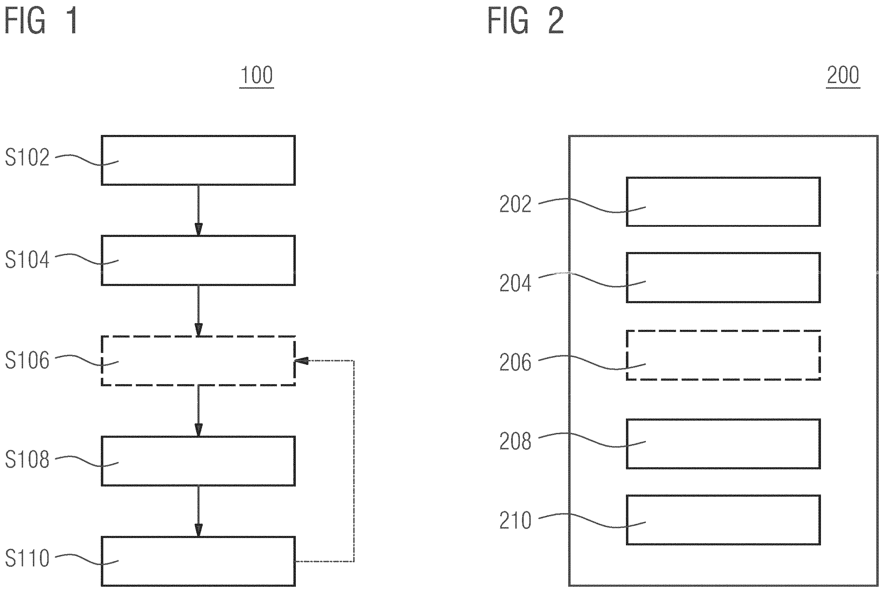

Fig. 1 shows an exemplary flowchart of a computer-implemented method for rendering animations of medical images. The method is generally denoted by reference sign 100.

In a step S102, at least one input is received. Each of the at least one input comprises a medical image dataset.

In a step S104, a set of keyframes associated with the received S102 at least one input is selected. A keyframe comprises predetermined values of a set of rendering parameters.

In a step S108, intermediary frames are generated in a temporal sequence between two consecutive keyframes. The consecutive keyframes are consecutive according to a temporal ordering of the keyframes within the selected S104 set of keyframes. Generating S108 the intermediary frames is based on optimizing a perceptual (e.g., difference) metric associated with the selected S104 set of keyframes and the generated S108 intermediary frames. Optimizing the perceptual (e.g., difference) metric comprises optimizing (e.g., minimizing) the perceptual (e.g., difference) metric as a function of values of the set of rendering parameters associated with each of the intermediary frames.

In a step S110 an animation is rendered using the generated S108 intermediary frames and the selected S104 set of keyframes.

Optionally, the method 100 further comprises a step S106 of temporally ordering the keyframes within the selected S104 set of keyframes. Further optionally, the temporal ordering S106 is based on optimizing a perceptual metric.

The perceptual metrics of the step S106 of temporally ordering the keyframes and of the step S108 of generating intermediary frames may, e.g., be independently chosen of one another.

The method 100 may comprise an optimization loop from the step S110 back to the step S106 (e.g., as indicated by the dashdotted line in Fig. 1) that may be executed until constraints on the animation are met.

As a simple concrete non-limiting embodiment, the method 100 may comprise optimizing a keyframe (e.g., temporal) ordering in the step S106, relaxing a keyframe timing (e.g., change a time interval, and/or a frame rate, between two consecutive keyframes) in the step S108, and rendering the animation in the step 110, and (e.g., re-)computing pHash image differences (as example of using a perceptual difference metric). If a perceptual difference between rendered images is greater than a predetermined threshold, the step S106 of optimizing the keyframe ordering may be repeated, in particular followed by repeating the steps S108 and S110 until the perceptual difference between the rendered images falls below the predetermined threshold.

Fig. 2 shows an exemplary computing device for rendering animations of medical images. The computing device is generally denoted by the reference sign 200.

The computing device 200 comprises a receiving unit 202 configured for receiving at least one input. Each of the at least one input comprises a medical image dataset.

The computing device 200 further comprises a selecting unit 204 configured for selecting a set of keyframes associated with the received at least one input. A keyframe comprises predetermined values of a set of rendering parameters.

The computing device 200 further comprises a generating unit 208 configured for generating intermediary frames in a temporal sequence between two consecutive keyframes. The consecutive keyframes are consecutive according to a temporal ordering of the keyframes within the selected set of keyframes. Generating the intermediary frames is based on optimizing a perceptual (e.g., difference) metric associated with the selected set of keyframes and the generated intermediary frames. Optimizing the perceptual (e.g., difference) metric comprises optimizing (e.g., minimizing) the perceptual (e.g., difference) metric as a function of values of the set of rendering parameters associated with each of the intermediary frames.

The computing device 200 still further comprises a rendering unit 210 configured for rendering an animation using the generated intermediary frames and the selected set of keyframes.

Optionally, the computing device 200 further comprises a temporally ordering unit 206 configured for temporally ordering the keyframes within the selected S104 set of keyframes. Further optionally, the temporal ordering S106 is based on optimizing a perceptual metric.

The computing device 200 may be configured to perform the method 100.

Creating compelling and clinically relevant animations for case review, diagnosis, therapy planning, and/or surgical planning is conventionally challenging. By the inventive technique, the rendering of an animation (also denoted as the storyboarding process) is automated (in particular computer-implemented) by optimizing the keyframe order and/or keyframe timing, in particular without user intervention.

In particular, three-dimensional (3D) medical imaging (e.g., comprised in the at least one input, and/or the medical image dataset) may be used in clinical applications, where views are synthesized based on an anatomical segmentation.

The inventive technique can produce effective animations for case review, diagnosis, therapy planning, and/or surgical planning, where minimalistic transitions between the clinically relevant views enhance the spatial understanding through motion parallax and/or temporal coherence.

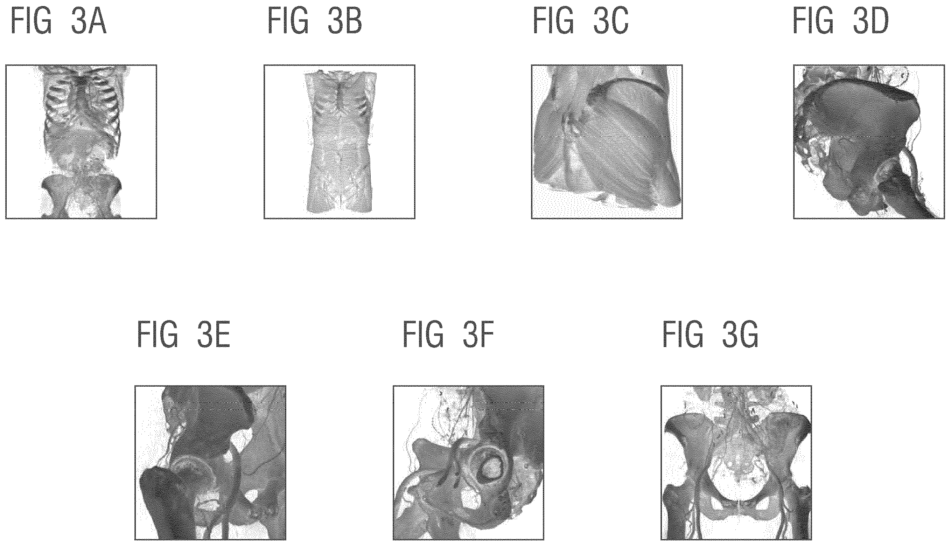

Figs. 3A to 3G illustrate an optimized ordering of the rendered views (and/or an optimized ordering of the keyframes, which may also be denoted as optimized keyframe sequence) in a hip, pelvis and/or joints medical image dataset (and/or snapshots) collection, which result in an animation (also denoted as final video) devoid of rapid (and/or abrupt) visual changes.

In Fig. 3A, the bone structure of a human torso is shown in a front view including the thorax and pelvis area. Fig. 3B shows the human torso in the front view with soft tissue (e.g., may blood vessels, tendons, and/or muscle tissue) partially occluding the bone structure. Fig. 3C shows a rotated rear/side view of the right pelvis and hip joint area including soft tissue. Fig. 3D shows only the bone structure of the rear/side view of Fig. 3C. Fig. 3E shows a rotated front/side view of the right pelvis and hip joint of Fig. 3D. Fig. 3F shows a further rotated and/or detailed view of the bone structure of the right pelvis and hip joint of Figs. 3D and 3E. In Fig. 3F, the right hip joint is clipped using a clip plane to show the structures behind, specifically the interior of the femoral head and/or ball of the hip joint (and/or the part of the femur bone that connects it to the pelvis). Fig. 3G shows a front view of the pelvis area including both right and left hip joint areas. In Fig. 3G, again only the bone structure is shown.

An exemplary embodiment of the inventive technique comprises the following components (e.g., comprised in the computing device 200): a 3D volume renderer (e.g., embodied by the rendering unit 210); a medical views (and/or medical image dataset) and/or keyframe authoring system **(e.g.,** embodied by the receiving unit 202); a keyframe animation system **(e.g.,** embodied by the generating unit 208); and interfaces to keyframe and animation timeline optimization processes **(e.g.,** embodied by the temporal ordering unit 206), including feedback with in-the-loop rendering and computation of one or more image and/or video quality metrics **(e.g.,** as perceptual metric).

Some embodiments may further employ an anatomical segmentation of 3D medical images **(e.g.,** comprised in the one or more medical image dataset). Alternatively or in addition, further embodiments may further employ an automated keyframe synthesis.

A basic implementation of the animation authoring system may rely on clinical experts to create relevant medical views **(e.g.,** comprised in the one of more medical image datasets) for a clinical use, including but not limited to loading one or more 3D or 3D + time (alternatively denoted as four-dimensional, 4D) patient images; applying and modifying camera, clipping, classification and/or lighting presets **(e.g.,** comprised in the set of rendering parameters); and/or saving and organizing a collection of medical views and/or keyframes **(e.g.,** comprised in the at least one input, and/or in the medical image dataset).

The user may be further responsible for assembling an animation storyboard by placing the keyframes on a timeline. Each keyframe comprises parameter animation tracks **(e.g.,** within the set of rendering parameters) which the animation system **(e.g.,** embodied by the generating unit 208) interpolates to produce intermediary frames at certain intervals for the animation (and/or the final video).

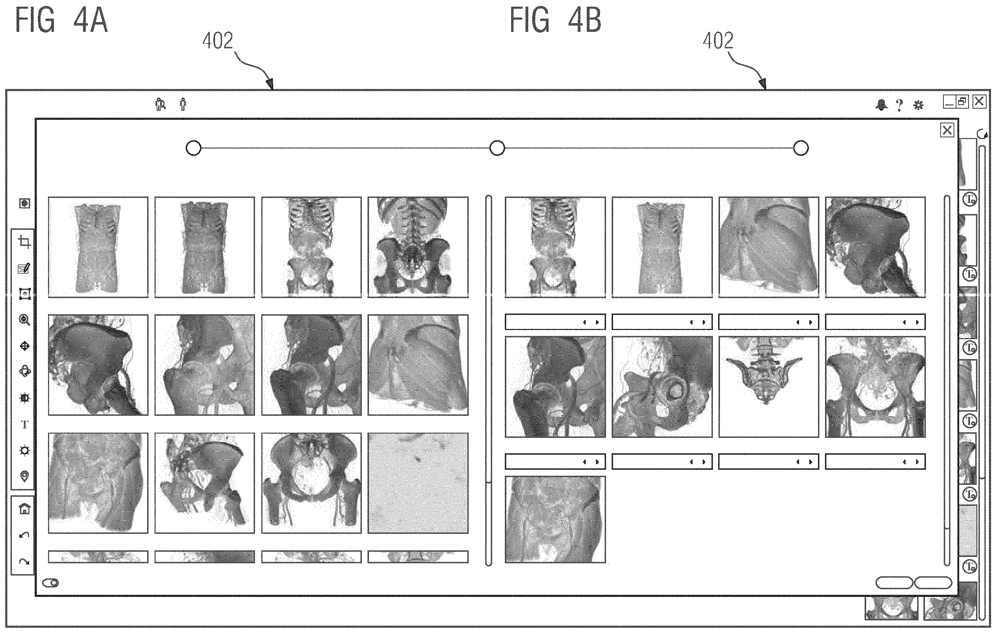

The keyframe animation capabilities may vary widely between animation systems. The exemplary application in Figs. 4A and 4B may store the **(e.g.,** full) set of rendering parameters and automatically generate parameter animation tracks to achieve the following animation effects:

- Spline interpolation of camera pose, clip plane movements, light orientation, and/or windowing;
- Blending of light probes and voxel classification;

- Automated fade effects for features toggled between keyframes, including clip planes, classification effects, masking, and painting; fade animations may also be generated for volume data changes.

An example timeline editing allows for any one, or both, the keyframe order and the timing to be modified. More comprehensive animation packages may allow for individual control of animation tracks, possibly at the cost of increased authoring complexity.

Fig. 4A shows an exemplary display on a **(e.g.,** graphical) user interface (UI, and/or GUI) 402 of parts of an exemplary comprehensive set of keyframes (also denoted as, e.g., collection of, existing medical views) comprising a plurality of rendered images (and/or medical views) with different values of rendering parameters (e.g., different values for one or more classification parameters, and/or for one or more camera parameters) for a medical image dataset, e.g., with all medical views of Figs. 3A to 3G in the comprehensive set of keyframes. Fig. 4B shows a further display on the UI (and/or GUI) 402, in which a user has manually authored (and/or selected) a storyboard (and/or a temporal ordering of keyframes within a set of selected keyframes) using the comprehensive set of keyframes. In the example of Fig. 4B, the selected set of keyframes comprises all medical views from Figs. 3A to 3G, with two further keyframes comprising medical views between Figs. 3F and 3G as well as after Fig. 3G additionally selected.

According to an embodiment, the keyframes are generated automatically from anatomical segmentations and clinical template specifications without user intervention.

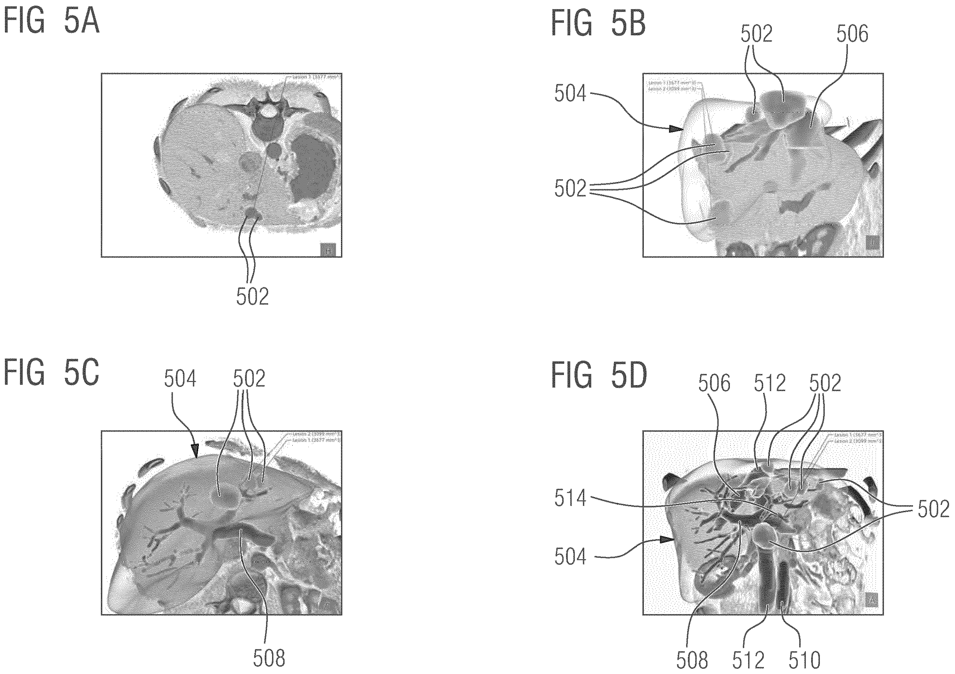

The example in Figs. 5A to 5D uses an AI-based liver, lesions, and vessels segmentation to synthesize clinically relevant views of patient data for oncological (and/or cancer therapy) support without user intervention. The views may then be assembled into storyboards (and/or the corresponding keyframes may be temporally ordered) for case review, and/or for intervention planning.

The images of Figs. 5A, 5B, 5C and 5D are illustrative of liver surgery planning (e.g., resection or ablation) based on automatic liver structure detection. The keyframes in the exemplary embodiment of Figs. 5A, 5B, 5C and 5D are generated automatically. All images of this embodiment combine volume rendering with automated camera, clipping and transfer function, together with mesh rendering of the detected structures.

In Figs. 5A, 5B, 5C and 5D, at reference sign 502, one or more liver lesions are displayed. In Figs. 5B, 5C and 5D, at reference sign 504 the liver surface is shown. Figs. 5B and 5D further show the hepatic veins at reference sign 506. Figs. 5C and 5D further show the portal veins at reference sign 508. In Fig. 5D, also the aorta 510, inferior vena cava 512 and hepatic arteries 514 are shown.

By the inventive technique, the specification of the timing (e.g., comprising a frame rate) for each keyframe may be automated (and/or computer-implemented) to constrain the speed of visual changes in the animations (and/or final videos). E.g., the timing specification may be related directly to the camera position between keyframes so that the interpolated intermediary frames and/or the interpolated animation (and/or video) avoid rapid changes in the camera velocity.

One or more image metrics (and/or a perceptual, e.g., difference, metric) may alternatively or in addition be used to compute an image-space distance (and/or a difference, and/or dissimilarity) between images rendered with consecutive (also: adjacent or neighboring) keyframes.

The timing may be relaxed for keyframes that result in more significant image changes (and/or larger differences in the images). Given an ordering of keyframes, to optimize the timing a direct relaxation of timing for animation parameter (and/or rendering parameter) changes between keyframes that lead to linear spatial changes in the result image may be utilized. The animation (and/or rendering) parameters may in particular comprise a camera position, orientation, field of view, and/or focal distance.

Alternatively or in addition, to optimize the timing separate video frame metric measurements for guiding the timing optimization for parameter changes with non-linear image response may be utilized. (E.g., rendering) parameters may comprise a windowing, transfer function and/or classification changes, and/or lighting changes. As perceptual metric (and/or image metric) a pHash, structural similarity, BRISQUE, and/or visual entropy may be utilized.

Further alternatively or in addition, to optimize the timing a hybrid technique (e.g., a hybrid of the direct relaxation and the separate video frame metric measurements) may be utilized with one or more of the following parameters: timing clip plane; crop box, by which a linear movement velocity may be optimized. Potentially, the optimization of the linear movement velocity may result in unbounded change in the perceptual metric (and/or image metric), e.g., clipping through homogeneous tissue vs. clipping near dense vessel structures; and/or volume data fades.

As part of the perceptual metric optimization process, in an embodiment a differentiable renderer may be used to compute the change in differentiable (e.g., rendering) parameters that results in the target image change, e.g., rather than using metric learning approaches or a simpler feedback optimization loop.

Further embodiments and/or more advanced implementations may further optimize the order of the keyframes. A clustering (which may correspond to, or may comprise, selecting a set of keyframes and/or performing a temporal ordering) of keyframes may be established, e.g., from user-specified tags or constraints related to the image content, so that relevant (e.g., comprising the same anatomical structure to be rendered) keyframes are clustered together, while the order of the clusters may be modified to minimize video metrics, such as perceived image change (and/or a perceptual difference metric).

The clinical content and/or the visible structures in the existing (and/or selected) keyframes may be determined based on an anatomical segmentation of the 2D rendered images, or the 3D volume data. E.g., a volumetric Monte Carlo path tracing renderer may keep track of the distances between light scattering locations and organ segmentation masks to determine which organs are rendered into each keyframe. The keyframes may be clustered (and/or temporally ordered) automatically (and/or computer-implemented) based on clinical content and the order within each cluster, with the option of an optimization based on one or more perceptual metrics (e.g., image and/or video metrics).

Deep reinforcement learning may be used for keyframe ordering, where an AI agent (also denoted as AI system) learns an optimal policy for selecting a consecutive (and/or) next keyframe given the set of keyframes. Alternatively or in addition, the AI agent may learn an optimal policy for changing keyframe timing data to optimize quality metrics (e.g., a perceptual, in particular difference, metric) for the animation (and/or final video).

Without loss of generality, an exemplary embodiment of the inventive technique may penalize and/or reward based on a total animation (and/or video) length, and/or camera travel distance; a cumulative and/or maximal perceptual change between final animation (and/or video) frames; and/or a temporal consistency in visible anatomical structures.

In an embodiment, the animation style of a user can be learned, **e.g.,** by the AI agent, based on the above factors as the user (and/or the AI agent) generates many animations. The information on the animation style may be used to suggest keyframe sequence and length for new animations that suit the user's artistic style, area of interest, and/or clinical needs.

In an embodiment, the AI agent (and/or AI system) after learning from clinical and artistic experts may be deployed to new and/or casual users to support effective animation authoring.

In a further embodiment, where the keyframing optimization is combined with automated keyframe synthesis **(e.g.,** based on anatomical segmentation), the AI agent (and/or AI system) may constrain parameters that would result in lower quality animations. As an example, the synthesis may, **e.g.,** only use two-axis camera rotations and/or select views closer to an anterior orientation to minimize camera movement in the animation (and/or final videos). Intermediate keyframes may further be synthesized by interpolating the parameters of, **e.g.,** existing, keyframes (and/or snapshots) to allow for higher quality animations.

In any embodiment, the AI agent (and/or AI system) may be implemented by a ML algorithm, and/or a NN. Alternatively or in addition, metric learning and/or deep reinforcement learning may be examples of Machine Learning (ML) approaches. Further alternatively or in addition, neural networks (NN) may also be also a type of ML.

In an embodiment, a semi-automatic (and/or computer-aided) animation technique may be used. E.g., the user may manually set up the set (also denoted as sequence) of keyframes comprising camera view settings (e.g., as one or more rendering parameters). By the inventive technique, other settings (and/or rendering parameters), **e.g.,** exposure, material parameters, rendering optimizations, and/ lengths of keyframes based on views, may be optimized.

The inventive technique is independent of any particular choice of rendering algorithm. While the exemplary embodiments target photorealistic rendering of 3D medical images with Monte Carlo path tracing, the inventive technique is broadly applicable to animations produced with other volume rendering, surface rendering, and/or fused volume and surface rendering algorithms.

The inventive technique may be further applied to, e.g., industrial CT and/or scientific visualization.

Simplified rendering algorithms may be used together with the final rendering algorithm, including denoised Monte Carlo path tracing, partial rendering (e.g., with fewer samples per pixel), and/or other optimizations for rapid animation quality evaluations as part of the ML algorithm and/or the optimization process.

Detection of the described techniques in unknown devices and/or systems may be performed by providing specially crafted medical image data (and/or snapshots) to the animation (and/or video) generation. The specially crafted medical image data can modify the rendering (e.g., camera) parameters with a predetermined range of values, e.g., for translation and/or rotation. An observer can determine if the keyframe timing maintains, e.g., a consistent camera speed in the animation (and/or resulting video). Alternatively or in addition, different classification functions may be applied to a synthetic medical image (and/or volume) dataset to create various degrees of difference in the images (and/or resulting snapshots), e.g., when measured with a perceptual (in particular, image) metric. An observer can measure the perceptual difference between frames in the (e.g., final) animation to determine if the animation (and/or final video) results in a more consistent change in the perceptual (and/or image) metric between frames than a trivial keyframe timing. Other aspects of the inventive technique, such as the automated keyframe ordering, may be reviewed in a similar manner.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

List of References

[1] D. Jönsson, E. Sundén, A. Ynnerman and T. Ropinski, "A Survey of Volumetric Illumination Techniques," Computer Graphics Forum, vol. 33, no. 1, pp. 27-51, 2014.

[2] K. Engel, M. Hadwiger, J. Kniss, C. Rezk-Salama and D. Weiskopf, Real-Time Volume Graphics, 2006.

[3] E. Dappa, K. Higashigaito, J. Fornaro, S. Leschka, S. Wildermuth and H. Alkadhi, "Cinematic rendering - an alternative to volume rendering for 3D computed tomography imaging," Insights into Imaging, vol. 7, no. 6, pp. 849-856, 2016.

[4] T. Kroes, "Exposure Render: An Interactive PhotoRealistic Volume Rendering Framework," PLOS ONE, vol. 8, no. 4, 2012.

[5] C. R. Alla Chaitanya, A. Kaplanyan, C. Schied, M. Salvi, A. Lefohn, D. Nowrouzezahrai and T. Aila, "Interactive Reconstruction of Monte Carlo Image Sequences using a Recurrent Denoising Autoencoder," ACM Transactions on Graphics, vol. 36, no. 4, pp. 98:1-98:12, 2017.

[6] T. Müller, B. McWilliams, F. Rousselle, M. Gross and J. Novák, "Neural Importance Sampling," ACM Transactions on Graphics, vol. 38, no. 5, pp. 145:1-145:19, 2019.

[7] M. M. Loper and M. J. Black, "OpenDR: An Approximate Differentiable Renderer," Proceedings of ECCV, vol. 8695, pp. 154--169, 2014.

[8] S. Zhao, W. Jakob and T.-M. Li, "Physics-based differentiable rendering: from theory to implementation," SIGGRAPH Courses, 2020.

[9] S. Weiss and R. Westermann, "Differentiable Direct Volume Rendering," IEEE Transactions on Visualization and Computer Graphics, vol. 28, no. 1, pp. 562-572, 2021.

[10] Z. Liu and M. F. Cohen, "Keyframe Motion Optimization By Relaxing Speed and Timing," in Eurographics Workshop on Animation, 1995.

[11] Z. Wang, E.P. Simoncelli, A.C. Bovik, "Multiscale structural similarity for image quality assessment," The Thirty-Seventh Asilomar Conference on Signals, Systems and Computers, 2003. Vol. 2. pp. 1398-1402, doi: 10.1109/ACSSC.2003.1292216

List of Reference Signs

| | |
|---|---|
| 100 | Computer-implemented method |
| S102 | Step of receiving an input comprising a medical image dataset |
| S104 | Step of selecting a set of keyframes |
| S106 | Step of temporally ordering the set of keyframes |
| S108 | Step of generating intermediary frames in a temporal sequence |
| S110 | Step of rendering the animation based on the intermediary frames in the temporal sequence and the selected set of keyframes |
| 200 | Computing device |
| 202 | Receiving unit |
| 204 | Selecting unit |
| 206 | Temporally ordering unit |
| 208 | Generating unit |
| 210 | Rendering unit |
| 402 | Display, in particular graphical user interface (GUI) |
| 502 | Liver lesion |
| 504 | Liver surface |
| 506 | Hepatic vein |
| 508 | Portal vein |
| 510 | Aorta |
| 512 | Inferior vena cava |
| 514 | Hepatic artery |

**Claims**

1. Computer-implemented method (100) for rendering animations of medical images, comprising the method steps of:

   - Receiving (S102) at least one input, wherein each of the at least one input comprises a medical image dataset, wherein the at least one input comprises two or more inputs;
   - Selecting (S104) a set of keyframes associated with the received (S104) at least one input, wherein a keyframe comprises predetermined values of a set of rendering parameters;
   - Temporally ordering (S106) the keyframes within the selected (S104) set of keyframes, wherein the temporal ordering (S106) is based on optimizing a perceptual metric, wherein an initial temporal ordering (S106) is modified if a value of the perceptual metric for the temporal ordering (S106) exceeds a predetermined threshold value indicative of a perceptual dissimilarity;
   - Generating (S108) intermediary frames in a temporal sequence between two consecutive keyframes, wherein the consecutive keyframes are consecutive according to the temporal ordering (S106) of the keyframes within the selected (S104) set of keyframes, wherein generating (S108) the intermediary frames is based on optimizing a perceptual metric associated with the selected (S104) set of keyframes and the generated (S108) intermediary frames, and wherein optimizing the perceptual metric comprises optimizing the perceptual metric as a function of values of the set of rendering parameters associated with each of the intermediary frames; and
   - Rendering (S110) an animation using the generated (S108) intermediary frames and the selected (S104) set of keyframes.

2. Method (100) according to claim 1, wherein the perceptual metric is selected from the group consisting of:

   - Perceptual hash, pHash;
   - Structural similarity;
   - Visual entropy; and
   - Blend reference image spatial quality evaluator, BRISQUE.

3. Method (100) according to any one of the preceding claims, wherein the at least one input comprises a two-dimensional medical image dataset, a three-dimensional medical image dataset, and/or a four-dimensional medical image dataset.

4. Method (100) according to any one of the preceding claims, wherein the medical image dataset comprised in at least one input is received (S102) from a medical scanner.

5. Method (100) according to any one of the preceding claims, wherein the medical image dataset comprised in the at least one input comprises at least two different medical image datasets obtained from at least two different medical scanners.

6. Method (100) according to any one of the preceding claims, wherein the set of rendering parameters comprises at least one rendering parameter selected from the group consisting of:

   - Camera parameter;
   - Clipping parameter;
   - Classification parameter; and
   - Lighting preset parameter.

7. Method (100) according to any one of the preceding claims, wherein a length of a time interval between consecutive intermediary frames, and/or an intermediary frame rate, is constant between two consecutive keyframes.

8. Method (100) according to any one of the preceding claims, wherein the step of generating (S108) the intermediary frames in the temporal sequence further comprises extending a length of a time interval between at least one pair of consecutive keyframes within the selected (S104) set of keyframes and expanding the selected (S104) set of keyframes by promoting one or more intermediary frames to keyframes, which are added to the selected (S104) set of keyframes to form an expanded set of keyframes, wherein the to be promoted one or more intermediary frames are associated with the at least one pair of consecutive keyframes for which the length of the time interval has been extended, and wherein the step of generating (S108) the intermediary frames in the temporal sequence is repeated for the expanded set of keyframes.

9. Method (100) according to the directly preceding claim, wherein the promoting of one or more intermediary frames to keyframes is performed if the perceptual metric between consecutive intermediary frames comprising the to-be-promoted one or more intermediary frames exceeds a predetermined threshold indicative of a perceptual dissimilarity.

10. Method (100) according to any one of the preceding claims, wherein the input comprises one or more animations, and wherein the one or more animations are comprised in the rendered (S110) animation.

11. Method (100) according to any one of the preceding claims, wherein a technique for the rendering (S110) comprises differentiable rendering, DR.

12. Method (100) according to any one of the preceding claims, wherein the method is performed by a neural network, NN, in particular comprising a convolutional neural network, CNN, and/or wherein the method is performed using artificial intelligence, AI.

13. Computing device (200) for rendering animations of medical images, the computing device (200) comprising:

   - a receiving unit (202) configured for receiving at least one input, wherein each of the at least one input comprises a medical image dataset, wherein the at least one input comprises two or more inputs;
   - a selecting unit (204) configured for selecting a set of keyframes associated with the received at least one input, wherein a keyframe comprises predetermined values of a set of rendering parameters;
   - a temporally ordering unit (206) configured for temporally ordering the keyframes within the selected set of keyframes, wherein the temporal ordering is based on optimizing a perceptual metric, wherein an initial temporal ordering is modified if a value of the perceptual metric for the temporal ordering exceeds a predetermined threshold value indicative of a perceptual dissimilarity;
   - a generating unit (208) configured for generating intermediary frames in a temporal sequence between two consecutive keyframes, wherein the consecutive keyframes are consecutive according to the temporal ordering of the keyframes within the selected set of keyframes, wherein generating the intermediary frames is based on optimizing a perceptual metric associated with the selected set of keyframes and the generated intermediary frames, and wherein optimizing the perceptual metric comprises optimizing the perceptual metric as a function of values of the set of rendering parameters associated with each of the intermediary frames; and
   - a rendering unit (210) configured for rendering an animation using the generated intermediary frames and the selected set of keyframes.

14. Computing device (200) according to the directly preceding claim, further configured to perform any one of the steps, and/or comprise any one of the features, of the method claims 2 to 12.

15. Medical viewing system for rendering animations of medical images, the medical viewing system comprising:

   - a computing device (200) according claim 13 or 14; and
   - a display (402) for displaying the rendered animation.

16. A computer program product comprising program elements which induce a computing device (200) to carry out the steps of the method (100) for rendering animations of medical images according to any one of the preceding method claims, when the program elements are loaded into a memory of the computing device (200).

**Patentansprüche**

1. Computerimplementiertes Verfahren (100) zum Rendering von Animationen medizinischer Bilder, das die folgenden Verfahrensschritte umfasst:

   - Empfang (S102) mindestens einer Eingabe, wobei jede der mindestens einen Eingabe einen medizinischen Bilddatensatz umfasst, wobei die mindestens eine Eingabe zwei oder mehr Eingaben umfasst;

- Auswahl (S104) eines Satzes von Schlüsselbildern, die mit der empfangenen (S104) mindestens einen Eingabe assoziiert sind, wobei ein Schlüsselbild vorbestimmte Werte eines Satzes von Renderingparametern umfasst;

- zeitliche Ordnung (S106) der Schlüsselbilder innerhalb des ausgewählten (S104) Satzes von Schlüsselbildern, wobei die zeitliche Ordnung (S106) auf einer Optimierung einer wahrnehmungsbasierten Metrik basiert, wobei eine anfängliche zeitliche Ordnung (S106) modifiziert wird, wenn ein Wert der wahrnehmungsbasierten Metrik für die zeitliche Ordnung (S106) einen vorbestimmten Schwellenwert überschreitet, der eine wahrnehmungsbasierte Unähnlichkeit angibt;

- Erzeugung (S108) von Zwischenbildern in einer zeitlichen Sequenz zwischen zwei aufeinanderfolgenden Schlüsselbildern, wobei die aufeinanderfolgenden Schlüsselbilder gemäß der zeitlichen Ordnung (S106) der Schlüsselbilder innerhalb des ausgewählten (S104) Satzes von Schlüsselbildern aufeinanderfolgen, wobei die Erzeugung (S108) der Zwischenbilder auf einer Optimierung einer wahrnehmungsbasierten Metrik basiert, die mit dem ausgewählten (S104) Satz von Schlüsselbildern und den erzeugten (S108) Zwischenbildern assoziiert ist, und wobei die Optimierung der wahrnehmungsbasierten Metrik eine Optimierung der wahrnehmungsbasierten Metrik als eine Funktion von Werten des Satzes von mit jedem der Zwischenbilder assoziierten Renderingparametern umfasst; und

- Rendering (S110) einer Animation unter Verwendung der erzeugten (S108) Zwischenbilder und des ausgewählten (S104) Satzes von Schlüsselbildern.

2. Verfahren (100) nach Anspruch 1, wobei die wahrnehmungsbasierte Metrik aus der Gruppe ausgewählt ist, die aus Folgendem besteht:

    - Wahrnehmungsbasierter Hash, pHash;
    - Strukturelle Ähnlichkeit;
    - Visuelle Entropie; und
    - Blind Reference Image Spatial Quality Evaluator, BRISQUE.

3. Verfahren (100) nach einem der vorhergehenden Ansprüche, wobei die mindestens eine Eingabe einen zweidimensionalen medizinischen Bilddatensatz, einen dreidimensionalen medizinischen Bilddatensatz und/oder einen vierdimensionalen medizinischen Bilddatensatz umfasst.

4. Verfahren (100) nach einem der vorhergehenden Ansprüche, wobei der in mindestens einer Eingabe enthaltene medizinische Bilddatensatz von einem medizinischen Scanner empfangen (S102) wird.

5. Verfahren (100) nach einem der vorhergehenden Ansprüche, wobei der in der mindestens einen Eingabe enthaltene medizinische Bilddatensatz mindestens zwei unterschiedliche medizinische Bilddatensätze umfasst, die von mindestens zwei unterschiedlichen medizinischen Scannern erhalten werden.

6. Verfahren (100) nach einem der vorhergehenden Ansprüche, wobei der Satz von Renderingparametern mindestens einen Renderingparameter umfasst, der aus der Gruppe ausgewählt ist, die aus folgendem besteht:

    - einem Kameraparameter;
    - einem Beschneidungsparameter;
    - einem Klassifizierungsparameter; und
    - einem voreingestellten Beleuchtungsparameter.

7. Verfahren (100) nach einem der vorhergehenden Ansprüche, wobei eine Länge eines Zeitintervalls zwischen aufeinanderfolgenden Zwischenbildern und/oder eine Zwischenbildfrequenz zwischen zwei aufeinanderfolgenden Schlüsselbildern konstant ist.

8. Verfahren (100) nach einem der vorhergehenden Ansprüche, wobei der Schritt der Erzeugung (S108) der Zwischenbilder in der zeitlichen Sequenz ferner Verlängern einer Länge eines Zeitintervalls zwischen mindestens einem Paar von aufeinanderfolgenden Schlüsselbildern innerhalb des ausgewählten (S104) Satzes von Schlüsselbildern und Erweitern des ausgewählten (S104) Satzes von Schlüsselbildern durch Hochstufen eines oder mehrerer Zwischenbilder zu Schlüsselbildern umfasst, die dem ausgewählten (S104) Satz von Schlüsselbilder hinzugefügt werden, um einen erweiterten Satz von Schlüsselbildern zu bilden, wobei der eine oder die mehreren hochzustufenden Zwischenbilder mit dem mindestens einen Paar von aufeinanderfolgenden Schlüsselbildern assoziiert sind, für den die Länge des Zeitintervalls verlängert wurde, und wobei der Schritt der Erzeugung (S108) der Zwischenbilder in der zeitlichen Sequenz für den erweiterten Satz von Schlüsselbildern wiederholt wird.

9. Verfahren (100) nach dem unmittelbar vorhergehenden Anspruch, wobei das Hochstufen eines oder mehrerer Zwischenbilder zu Schlüsselbildern durchgeführt wird, wenn die wahrnehmungsbasierte Metrik zwischen aufeinanderfolgenden Zwischenbildern, die das eine oder die mehreren hochzustufenden Zwischenbilder enthaltend, einen vorbestimmten Schwellenwert überschreitet, der eine wahrnehmungsbasierte Unähnlichkeit angibt.

10. Verfahren (100) nach einem der vorhergehenden Ansprüche, wobei die Eingabe eine oder mehrere Animationen umfasst, und wobei die eine oder die mehreren Animationen in der gerenderten (S110) Animation enthalten sind.

11. Verfahren (100) nach einem der vorhergehenden Ansprüche, wobei eine Technik für das Rendering (S110) ein differenzierbares Rendering, DR, umfasst.

12. Verfahren (100) nach einem der vorhergehenden Ansprüche, wobei das Verfahren durch ein neuronales Netzwerk, NN, durchgeführt wird, das insbesondere ein neuronales Faltungsnetzwerk, CNN, umfasst, und/oder wobei das Verfahren unter Verwendung von künstlicher Intelligenz, KI, durchgeführt wird.

13. Rechenvorrichtung (200) zum Rendering von Animationen medizinischer Bilder, wobei die Rechenvorrichtung (200) Folgendes umfasst:

   - eine Empfangseinheit (202), die zum Empfang mindestens einer Eingabe ausgelegt ist, wobei jede der mindestens einen Eingabe einen medizinischen Bilddatensatz umfasst, wobei die mindestens eine Eingabe zwei oder mehr Eingaben umfasst;
   - eine Auswahleinheit (204), die zur Auswahl eines Satzes von Schlüsselbildern ausgelegt ist, die mit der empfangenen mindestens einen Eingabe assoziiert sind, wobei ein Schlüsselbild vorbestimmte Werte eines Satzes von Renderingparametern umfasst;
   - eine zeitliche Ordnungseinheit (206), die zur zeitlichen Ordnung der Schlüsselbilder innerhalb des ausgewählten Satzes von Schlüsselbildern ausgelegt ist, wobei die zeitliche Ordnung auf einer Optimierung einer wahrnehmungsbasierten Metrik basiert, wobei eine anfängliche zeitliche Ordnung modifiziert wird, wenn ein Wert der wahrnehmungsbasierten Metrik für die zeitliche Ordnung einen vorbestimmten Schwellenwert überschreitet, der eine wahrnehmungsbasierte Unähnlichkeit angibt;
   - eine Erzeugungseinheit (208), die zur Erzeugung von Zwischenbildern in einer zeitlichen Sequenz zwischen zwei aufeinanderfolgenden Schlüsselbildern ausgelegt ist, wobei die aufeinanderfolgenden Schlüsselbilder gemäß der zeitlichen Ordnung der Schlüsselbilder innerhalb des ausgewählten Satzes von Schlüsselbildern aufeinanderfolgen, wobei die Erzeugung der Zwischenbilder auf einer Optimierung einer wahrnehmungsbasierten Metrik basiert, die mit dem ausgewählten Satz von Schlüsselbildern und den erzeugten Zwischenbildern assoziiert ist, und wobei die Optimierung der wahrnehmungsbasierten Metrik eine Optimierung der wahrnehmungsbasierten Metrik als eine Funktion von Werten des Satzes von mit jedem der Zwischenbilder assoziierten Renderingparametern umfasst; und
   - eine Renderingeinheit (210), die zum Rendering einer Animation unter Verwendung der erzeugten Zwischenbilder und des ausgewählten Satzes von Schlüsselbildern ausgelegt ist.

14. Rechenvorrichtung (200) nach dem unmittelbar vorhergehenden Anspruch, die ferner dazu ausgelegt ist, einen beliebigen der Schritte und/oder ein beliebiges der Merkmale der Verfahrensansprüche 2 bis 12 durchzuführen bzw. zu umfassen.

15. Medizinisches Betrachtungssystem zum Rendering von Animationen medizinischer Bilder, wobei das medizinische Betrachtungssystem Folgendes umfasst:

   - eine Rechenvorrichtung (200) nach Anspruch 13 oder 14; und
   - eine Anzeige (402) zum Anzeigen der gerenderten Animation.

16. Computerprogrammprodukt, umfassend Programmelemente, die eine Rechenvorrichtung (200) dazu veranlassen, die Schritte des Verfahrens (100) zum Rendering von Animationen medizinischer Bilder nach einem der vorhergehenden Verfahrensansprüche auszuführen, wenn die Programmelemente in einen Speicher der Rechenvorrichtung (200) geladen werden.

## Revendications

1. Procédé (100) mis en œuvre par ordinateur pour le rendu d'animations d'images médicales, comprenant les étapes de procédé de :

   - réception (S102) d'au moins une entrée, l'entrée ou chacune des entrées comprenant un ensemble de données d'image médicale, l'entrée ou les entrées comprenant deux entrées ou plus ;
   - sélection (S104) d'un ensemble d'images clés associées à au moins une entrée reçue (S104), une image clé comprenant des valeurs prédéterminées d'un ensemble de paramètres de rendu ;

- ordonnancement temporel (S106) des images clés au sein de l'ensemble d'images clés sélectionné (S104), l'ordonnancement temporel (S106) étant basé sur l'optimisation d'une métrique perceptuelle, un ordonnancement temporel initial (S106) étant modifié si une valeur de la métrique perceptuelle de l'ordonnancement temporel (S106) dépasse une valeur seuil prédéterminée indicative d'une dissimilarité perceptuelle ;

- génération (S108) d'images intermédiaires dans une séquence temporelle entre deux images clés consécutives, les images clés consécutives étant consécutives suivant l'ordonnancement temporel (S106) des images clés au sein de l'ensemble d'images clés sélectionné (S104), la génération (S108) des images intermédiaires étant basée sur l'optimisation d'une métrique perceptuelle associée à l'ensemble (S104) d'images clés sélectionné et aux images intermédiaires générées (S108), et l'optimisation de la métrique perceptuelle comprenant l'optimisation de la métrique perceptuelle en fonction de valeurs de l'ensemble de paramètres de rendu associées à chacune des images intermédiaires ; et

- rendu (S110) d'une animation à l'aide des images intermédiaires générées (S108) et de l'ensemble d'images clés sélectionné (S104).

**2.** Procédé (100) selon la revendication 1, dans lequel la métrique perceptuelle est choisie dans le groupe constitué de :

- hachage perceptuel, pHash ;
- similarité structurelle ;
- entropie visuelle ; et
- évaluateur de qualité spatiale d'image de référence aveugle, BRISQUE.

**3.** Procédé (100) selon l'une quelconque des revendications précédentes, l'entrée ou les entrées comprenant un ensemble de données d'image médicale bidimensionnelle, un ensemble de données d'image médicale tridimensionnelle et/ou un ensemble de données d'image médicale en quatre dimensions.

**4.** Procédé (100) selon l'une quelconque des revendications précédentes, l'ensemble de données d'image médicale compris dans au moins une entrée étant reçu (S102) en provenance d'un scanner médical.

**5.** Procédé (100) selon l'une quelconque des revendications précédentes, l'ensemble de données d'image médicale compris dans l'entrée ou les entrées comprenant au moins deux ensembles de données d'image médicale différents obtenus à partir d'au moins deux scanners médicaux différents.

**6.** Procédé (100) selon l'une quelconque des revendications précédentes, l'ensemble de paramètres de rendu comprenant au moins un paramètre de rendu choisi dans le groupe constitué de :

- paramètre de la caméra ;
- paramètre de détourage ;
- paramètre de classification ; et
- paramètre prédéterminé d'éclairage.

**7.** Procédé (100) selon l'une quelconque des revendications précédentes, une longueur d'un intervalle de temps entre des images intermédiaires consécutives, et/ou une cadence d'images intermédiaires, étant constantes entre deux images clés consécutives.

**8.** Procédé (100) selon l'une quelconque des revendications précédentes, l'étape de génération (S108) des images intermédiaires dans la séquence temporelle comprenant en outre la prolongation de la longueur d'un intervalle de temps entre au moins une paire d'images clés consécutives à l'intérieur de l'ensemble sélectionné (S104) d'images clés et l'extension de l'ensemble sélectionné (S104) d'images clés en promouvant une ou plusieurs images intermédiaires en images clés, qui sont ajoutées à l'ensemble sélectionné (S104) d'images clés pour former un ensemble étendu d'images clés, l'image ou les images intermédiaires à promouvoir étant associées à la ou aux paires d'images clés consécutives pour lesquelles la longueur de l'intervalle de temps a été prolongée, et l'étape de génération (S108) des images intermédiaires dans la séquence temporelle étant répétée pour l'ensemble étendu d'images clés.

**9.** Procédé (100) selon la revendication directement précédente, la promotion d'une ou de plusieurs images intermédiaires en images clés étant effectuée si la métrique perceptuelle entre des images intermédiaires consécutives comprenant l'image ou les images intermédiaires à promouvoir dépasse un seuil prédéterminé indicatif d'une dissimilarité perceptuelle.

**10.** Procédé (100) selon l'une quelconque des revendications précédentes, l'entrée comprenant une ou plusieurs animations, et l'animation ou les animations étant comprises dans l'animation rendue (S110) .

**11.** Procédé (100) selon l'une quelconque des revendications précédentes, une technique de rendu (S110) comprenant un rendu différentiable, DR.

**12.** Procédé (100) selon l'une quelconque des revendications précédentes, le procédé étant réalisé par un réseau de neurones, NN, en particulier à réseau de neurones convolutif, CNN, et/ou le procédé étant réalisé en utilisant une intelligence artificielle, IA.

**13.** Dispositif informatique (200) de rendu d'animations d'images médicales, le dispositif informatique (200) comprenant :

- une unité (202) de réception configurée pour recevoir au moins une entrée, l'entrée ou chacune des entrées comprenant un ensemble de données d'image médicale, l'entrée ou les entrées comprenant deux entrées ou plus ;
- une unité (204) de sélection configurée pour sélectionner un ensemble d'images clés associées à l'entrée ou aux entrées reçues, une image clé comprenant des valeurs prédéterminées d'un ensemble de paramètres de rendu ;
- une unité (206) d'ordonnancement temporel configurée pour ordonner temporellement les images clés au sein de l'ensemble d'images clés sélectionné, l'ordonnancement temporel étant basé sur l'optimisation d'une métrique perceptuelle, un ordonnancement temporel initial étant modifié si une valeur de la métrique perceptuelle de l'ordonnancement temporel dépasse une valeur seuil prédéterminée indicative d'une dissimilarité perceptuelle ;
- une unité (208) de génération configurée pour générer des images intermédiaires dans une séquence temporelle entre deux images clés consécutives, les images clés consécutives étant consécutives suivant l'ordonnancement temporel des images clés au sein de l'ensemble d'images clés sélectionné, la génération des images intermédiaires étant basée sur l'optimisation d'une métrique perceptuelle associée à l'ensemble d'images clés sélectionné et aux images intermédiaires générées, et l'optimisation de la métrique perceptuelle comprenant l'optimisation de la métrique perceptuelle en fonction de valeurs de l'ensemble de paramètres de rendu associées à chacune des images intermédiaires ; et
- une unité (210) de rendu configurée pour restituer une animation en utilisant les images intermédiaires générées et l'ensemble d'images clés sélectionné.

**14.** Dispositif informatique (200) selon la revendication qui précède immédiatement, configuré en outre pour réaliser l'une quelconque des étapes, ou pour comprendre l'une quelconque des caractéristiques, selon les revendications de procédé 2 à 12.

**15.** Système de visualisation médicale pour le rendu d'animations d'images médicales, le système de visualisation médicale comprenant :

- un dispositif informatique (200) selon la revendication 13 ou 14 ; et
- un afficheur (402) servant à afficher l'animation restituée.

**16.** Produit-programme informatique comprenant des éléments de programme qui amènent un dispositif informatique (200) à réaliser les étapes du procédé (100) de rendu d'animations d'images médicales selon l'une des revendications de procédé précédentes, lorsque les éléments de programme sont chargés dans une mémoire du dispositif informatique (200).

FIG 1

100

S102

S104

S106

S108

S110

FIG 2

200

202

204

206

208

210

EP 4 401 040 B1

FIG 3A

FIG 3B

FIG 3C

FIG 3D

FIG 3E

FIG 3F

FIG 3G

FIG 4A

FIG 4B

402

402

FIG 5A

502

FIG 5B

502      506

504

502

FIG 5C

504   502

508

FIG 5D

506   512   502

514

504                                  502

508   512   510

EP 4 401 040 B1

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10692267 B1

### Non-patent literature cited in the description

- **SIMON NIKLAUS et al.** Video Frame Interpolation via Adaptive Separable Convolution. *arXiv:1708.01692v1*
- **D. JÖNSSON** ; **E. SUNDÉN** ; **A. YNNERMAN** ; **T. ROPINSKI**. A Survey of Volumetric Illumination Techniques. *Computer Graphics Forum*, 2014, vol. 33 (1), 27-51
- **K. ENGEL** ; **M. HADWIGER** ; **J. KNISS** ; **C. REZK-SALAMA** ; **D. WEISKOPF**. *Real-Time Volume Graphics*, 2006
- **E. DAPPA** ; **K. HIGASHIGAITO** ; **J. FORNARO** ; **S. LESCHKA** ; **S. WILDERMUTH** ; **H. ALKADHI**. Cinematic rendering - an alternative to volume rendering for 3D computed tomography imaging. *Insights into Imaging*, 2016, vol. 7 (6), 849-856
- **T. KROES**. Exposure Render: An Interactive Photo-Realistic Volume Rendering Framework. *PLOS ONE*, 2012, vol. 8 (4)
- **C. R. ALLA CHAITANYA** ; **A. KAPLANYAN** ; **C. SCHIED** ; **M. SALVI** ; **A. LEFOHN** ; **D. NOWROUZEZAHRAI** ; **T. AILA**. Interactive Reconstruction of Monte Carlo Image Sequences using a Recurrent Denoising Autoencoder. *ACM Transactions on Graphics*, 2017, vol. 36 (4), 98, 1-98, 12
- **T. MÜLLER** ; **B. MCWILLIAMS** ; **F. ROUSSELLE** ; **M. GROSS** ; **J. NOVÁK**. Neural Importance Sampling. *ACM Transactions on Graphics*, 2019, vol. 38 (5), 145, 1-145, 19
- **M. M. LOPER** ; **M. J. BLACK**. OpenDR: An Approximate Differentiable Renderer. *Proceedings of ECCV*, 2014, vol. 8695, 154-169
- **S. ZHAO** ; **W. JAKOB** ; **T.-M. LI**. Physics-based differentiable rendering: from theory to implementation. *SIGGRAPH Courses*, 2020
- **S. WEISS** ; **R. WESTERMANN**. Differentiable Direct Volume Rendering. *IEEE Transactions on Visualization and Computer Graphics*, 2021, vol. 28 (1), 562-572
- **Z. LIU** ; **M. F. COHEN**. Keyframe Motion Optimization By Relaxing Speed and Timing. *Eurographics Workshop on Animation*, 1995
- **Z. WANG** ; **E.P. SIMONCELLI** ; **A.C. BOVIK**. Multi-scale structural similarity for image quality assessment. *The Thirty-Seventh Asilomar Conference on Signals, Systems and Computers*, 2003, vol. 2, 1398-1402